# EUROPEAN PATENT SPECIFICATION

(11) **EP 1 164 287 B1**
(45) Date of publication and mention of the grant of the patent: **19.04.2006**
(21) Application number: 01830286.9
(22) Date of filing: 30.04.2001
(51) Int. Cl.: F03G 7/06

(54) **Shape memory actuating device**
Betätigungsvorrichtung mit Formgedächtniselement
Dispositif d'actionnement à élément à mémoire de forme

(30) Priority: 02.05.2000 IT TO000408
(43) Date of publication of application: 19.12.2001
(73) Proprietor: C.R.F. Società Consortile per Azioni, 10043 Orbassano (TO) (IT)
(72) Inventor: Pairetti, Bartolomeo, 12032 Barge (Cuneo) (IT); Butera, Francesco, 10100 Torino (IT); Alacqua, Stefano, 10090 Rivoli (Tornino) (IT)
(74) Representative: Buzzi, Franco

(56) References cited:
- WO-A-99/61792
- US-A- 4 665 334
- PATENT ABSTRACTS OF JAPAN vol. 009, no. 142 (M-388), 18 June 1985 (1985-06-18) & JP 60 022079 A (NIHON HATSUJIYOU KK), 4 February 1985 (1985-02-04)
- PATENT ABSTRACTS OF JAPAN vol. 011, no. 321 (M-633), 20 October 1987 (1987-10-20) & JP 62 103487 A (NHK SPRING CO LTD), 13 May 1987 (1987-05-13)
- PATENT ABSTRACTS OF JAPAN vol. 009, no. 326 (M-441), 21 December 1985 (1985-12-21) & JP 60 159378 A (FURUKAWA DENKI KOGYO KK), 20 August 1985 (1985-08-20)

## Description

This invention relates to an actuator which exploits the properties of memory shape alloys.

A memory shape actuator according to the preamble of claim 1 is known from WO 99/61792. In this document,a constant force actuator transforms applied heat to an applied force on an output device. Strips of shape memory alloy are coiled into spirals and trained to have this configuration as a static state. The shape memory alloy springs are attached to the output device applying a directional force. When one of the springs is heated, the modulus of elasticity within the spring material changes. This change in modulus increases the force in which the spring is trying to return to its static state which in turn increases the force applied to the output device, upsetting the balance of forces and resulting in a rotation.

The purpose of this invention is to provide an actuator presenting highly efficient operation which size can also be extremely reduced, despite having a simple structure and a relatively low cost.

In order to attain this purpose, this invention relates to a memory shape actuator as set forth in claim 1.

The devices for heating the reed can consist of devices for feeding an electrical current across the reed, so to heat by Joule effect. In order to return the rollers to from the final position to the resting position, elastic devices, for example, can be provided and associated to one of the two rollers so to recall the rollers towards the resting position as soon as the temperature of the reed returns under the transition value. Alternatively, two reeds working in opposite directions, one causing the passage from the resting position to the final position, the other for causing the return to the resting position, can be implemented.

The transmission devices arranged between the two rollers are advantageously made, in a preferred form of embodiment of this invention, by a pair of mutually meshed cogs, connected respectively to be turned with the two rollers.

Thanks to the characteristics described above, the actuator according to this invention is simple, small in size and cost-effective. It can be used in a variety of applications. For example, one of the cogs can be connected to turn with a worm screw causing the linear movement of a screw belonging to an actuator stem. In another example, one of the cogs can mesh either a rack belonging to an actuator stem or another rack belonging to a controlled unit (e.g. a sliding door). In this case, the reed is wound around one of the rollers, in resting condition, so to form a plurality of turns on the roller.

This ensures more rotations in the passage from the resting position to the final position. According to another example of the application, the shaft of one of the two rollers can control the movement of the lock pin of a valve (for example, a throttle). Alternatively, the shafts of both rollers can operate two locking levers of a pin in a locking mechanism for any application (for example, the mechanism of the door lock in a motor vehicle).

This invention will be better explained by the following detailed descriptions with reference to the accompanying figure as non-limiting example, whereas:
- figures 1, 2 are prospective views of a reed wound as a spiral, made of a memory shape alloy, in free condition, under and over the transition temperature, respectively,
- figure 3 is a diagram illustrating the operating principle of the invention,
- figure 4 is a perspective schematic view of a first form of embodiment of the actuator according to this invention,
- figure 5 is a perspective view of a second form of embodiment,
- figures from 6 to 8 are perspective views illustrating three different possible applications of the actuator according to this invention,
- figure 9 is a front, schematic view of the device in figure 8,
- figure 10 illustrates another possible application of the device according to this invention,
- figures 11, 12 illustrate an additional application and
- figures 13 and 14 illustrate a variation of the reed in the device according to this invention.

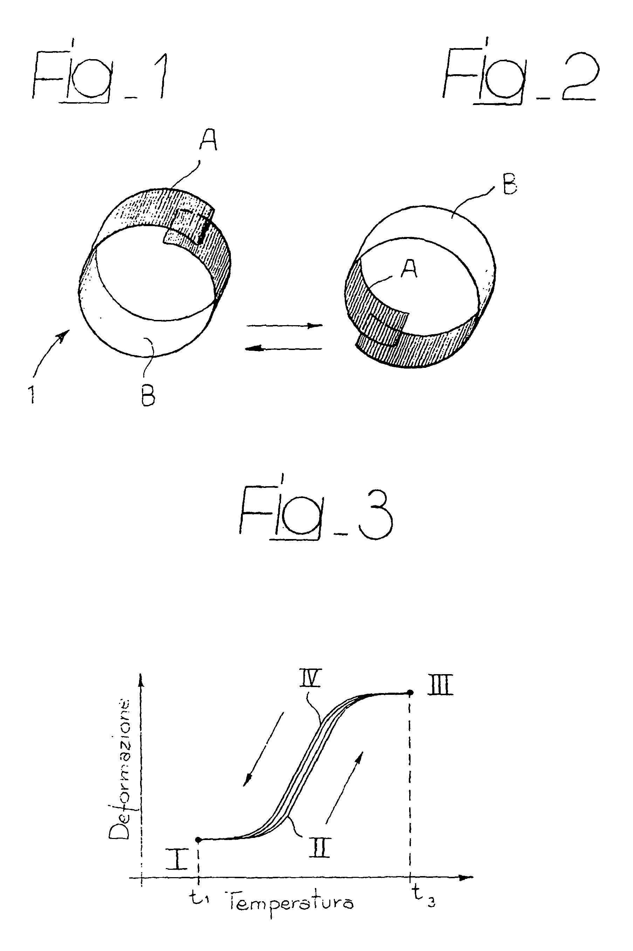

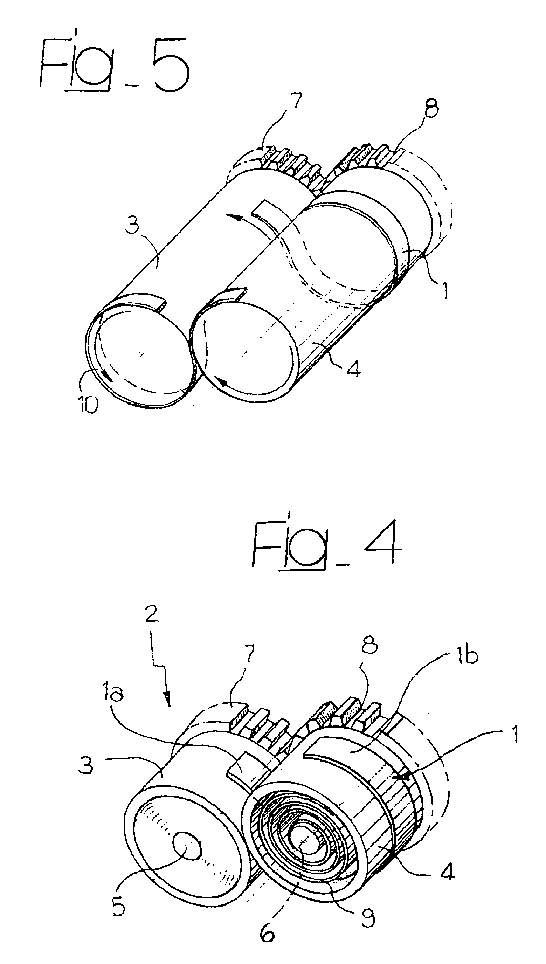

With reference to figure 1, the actuator according to this invention exploits the properties of an elongated, flat reed 1 made of a shape memory alloy. The reed 1 is illustrated in figures 1, 2 in free condition, in the conditions corresponding to a temperature which is lower to the transition temperature and a temperature which is higher than the transition temperature, respectively. When the temperature of the reed is under the transition temperature, the reed 1 is wound as a spiral according to a first winding direction, so to present one side A facing outwards and one side B facing inwards. When the temperature of the reed exceeds the transition temperature, the reed tends to wind in the opposite direction (figure 2), with the side A facing inwards and the side B facing outwards. The diagram in figure 3 shows the deformation of the reed as the temperature varies. The resting condition illustrated in figure 1 corresponding to point I in the diagram in figure 3, which in turn corresponding to a temperature value t₁. Starting from this condition, an increase in the temperature (side II of the diagram) will increase the deformation to value III, corresponding to temperature t₃ (condition corresponding to that illustrated in figure 2). The reed can thus be returned (in a way which will be illustrated in the following text) to the resting condition I (section IV).

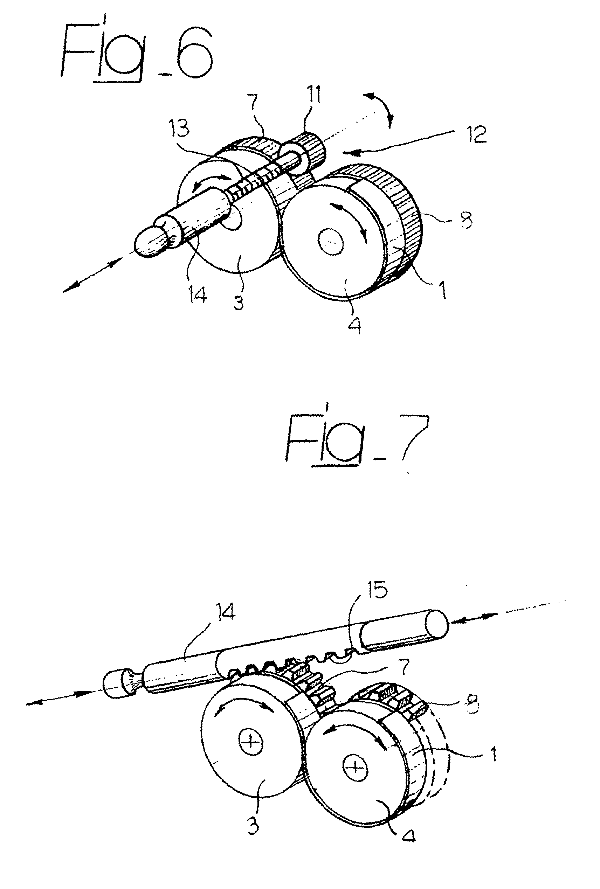

With reference to figure 4, the actuator according to this invention, generally indicated with numeral 2, comprises two rollers 3, 4, assembled to freely turn around parallel axes 5, 6. For greater clarity, the drawings do not illustrate the structure supporting the two rotating rollers 3, 4. These construction details are not illustrated because they can be made in any known way and because their elimination makes the drawings easier and more readily comprehensible. The two rollers 3, 4 are mutually connected by transmission devices which make the rollers turn simultaneously in opposite directions. In the example shown, said transmission devices consist of two cogs 7, 8, which are mutually meshed and respectively connected to turn with the rollers 3, 4. Finally, an elongated, flat reed 1, of the type described with reference to figures 1, 2, with terminal portions 1a, 1b ensured to the two rollers 3, 4 and at least partially wound on said rollers is associated to said rollers 3, 4. The section of the reed 1 between one roller and the other is arranged in the shape of an S. In the resting condition of the actuator, the reed 1 is nearly completely wound on the roller 4. When the reed 1 is heated, for example, when it is crossed by an electrical current, the reed 1 tends to wind in the opposite direction, which causes the reed 1 to unwind from the roller 4 and wind on the roller 3, with the simultaneous consequent rotation in opposite directions of the two rollers 3, 4 to a final condition in which the reel 1 is nearly entirely wound on the roller 3, The roller 4 is associated to a spiral spring 9 which tends to recall the two rollers to the starting position when the reed is cooled. Alternatively (see figure 5), two reeds 1, 10 can be arranged in such a way to act one in the direction causing the rollers to move from the resting position to the final position and the other in the return direction of the rollers to the resting position.

Figure 6 illustrates a possible application of the actuator according to this invention in which the cog 7 meshes a tooth 11 of the cog 12 which is integral with a screw 13 fastened to an actuator stem 14. The screw 12 is locked in axial position, reason for which its rotation causes the linear movement of the actuator stem 14 which can control any unit destined to be controlled between two extreme positions.

Figure 7 illustrates a variation in which the actuator stem 14 fits a rack 15 which meshes the cog 7. A similar solution is also shown in figures 11, 12 with reference to the control device of a sliding door.

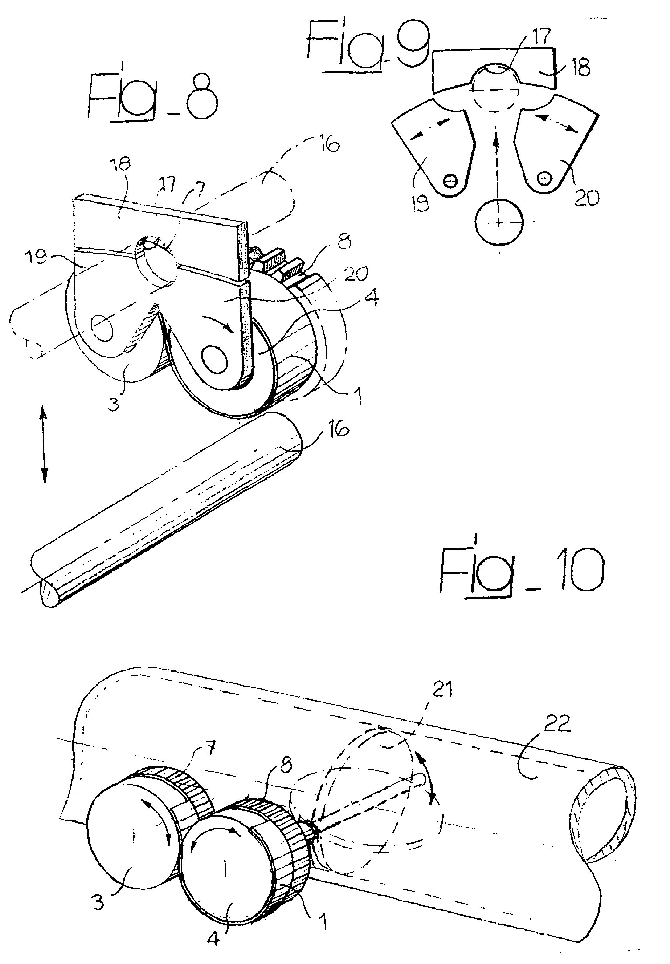

Figures 8, 9 are a perspective view and a front view of a lock in which a pin 16 is locked in a housing 17 defined between a first fixed locking element 18 and two rocking levers 19, 20 which are fitted on the axes of the two rollers 3, 4 and can move between an open condition (figure 9), in which the pin 16 is let in and out of the housing 17 and a locked, closed condition (figure 8). A lock of this type can be used in a variety of applications, for example, in the mechanism of the door lock in a motor vehicle.

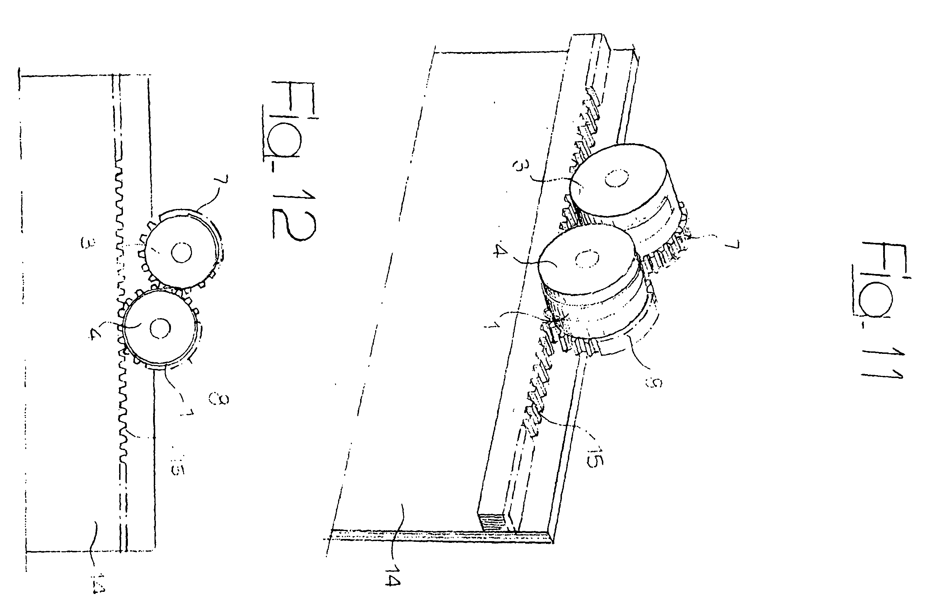

Figure 10 illustrates another application in which the roller 4 controls the rotation of valve lock pin, in this case a throttle 21 in an intake manifold of an internal combustion engine.

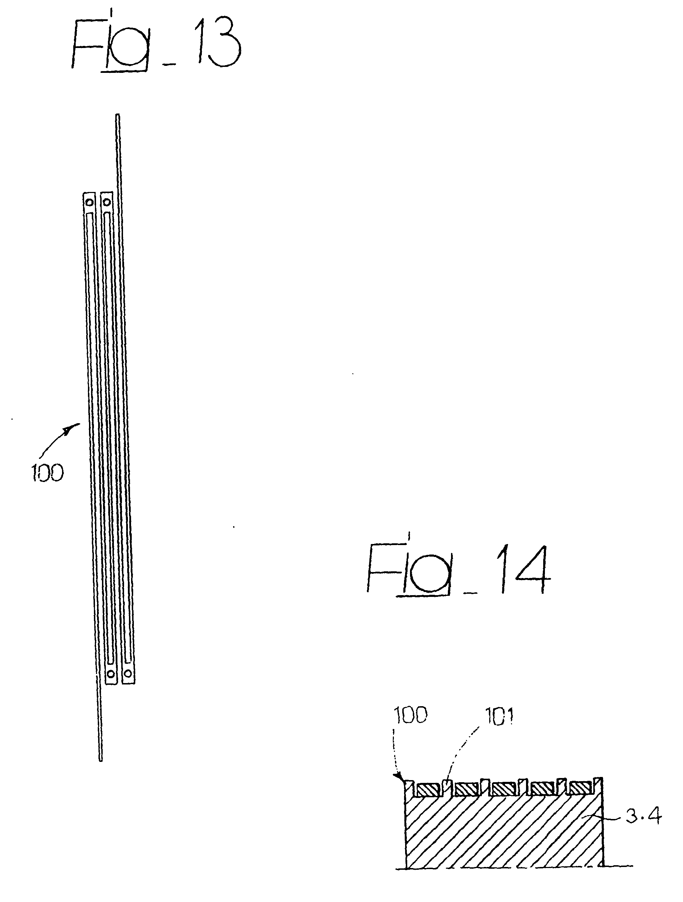

Finally, figures 13, 14 are plan and cross-section views showing a reed 100 made of an electrical conductor arranged in the form of a serpentine defining the reed. The various branches of the conductor 100 are destined to be received in the same number of housings 101 on the lateral surface of the respective roller 3 or 4. The wire is crossed by an electrical current to heat it. Naturally, also in this case, the conductor is made of a shape memory alloy.

## Claims

1. Shape memory alloy actuator comprising:
- a flat, elongated reed (1), made of shape memory alloy, with two extremity portions (1a, 1b),
- devices for heating said reed (1) to a temperature exceeding a transition temperature,
**characterized in that** it further comprises:
- a first and second roller (3, 4) freely turning on parallel axes (5, 6),
- transmission devices (7, 8) of the rotation between said first and said second roller (3, 4), such to make said rollers turn simultaneously in opposite directions,
and **in that**:
said two extremity portions (1a, 1b), are respectively fastened to said first and said second roller (3, 4) and at least partially wound on said rollers with the reed (1) section arranged between one roller and the other forming an S, and
said reed tending to wind in the opposite direction with respect to the original direction when it is heated by said heating devices beyond said transition temperature so as to cause the simultaneous rotation of the two rollers (3, 4) in opposite direction, starting from a resting position, in which the reed (1) is nearly completely wound on the first roller (4) to a final position in which the reed (1) is nearly completely wound on the second roller (3).

2. Actuator according to claim 1, **characterised in that** said transmission devices consist of two cogs (7, 8), mutually meshed and connected to respective turn on the two rollers (3, 4).

3. Actuator according to claim 1, **characterised in that** at least one of the two rollers (3, 4) is equipped with elastic devices (9) recalling the two rollers to the resting position.

4. Actuator according to claim 1, **characterised in that** two reeds (1, 10) are associated in total to the two rollers (3, 4) arranged so to cause the rotation of the rollers from the resting position to the final position respectively and the return of the rollers from the final position to the resting position.

5. Actuator according to claim 1, **characterised in that** the heating devices can cause an electrical current to cross said reed (1).

6. Actuator according to claim 1, **characterised in that** one of said cogs (7) is connected to turn a screw (13) causing the linear movement of an actuator stem (14).

7. Actuator according to claim 1, **characterised in that** one of said cogs (7) meshes a rack (15) belonging to an actuator stem (14).

8. Actuator according to claim 1, **characterised in that** the shaft of one of said rollers (3, 4) controls a valve lock pin (21).

9. Actuator according to claim 1, **characterised in that** one of the cogs (7) meshes a rack belonging to a gate or sliding door.

10. Actuator according to claim 1, **characterised in that** the two rollers control and turn two rocking levers (19, 20) for locking a pin (16) in a lock.

## Patentansprüche

1. Betätigungsvorrichtung mit Formgedächtnislegierung, umfassend:
- ein flaches, längliches Band (1), aus einer Formgedächtnislegierung hergestellt, mit zwei Extremitätsabschnitten (1a, 1b)
- Vorrichtungen zum Erhitzen des Bands (1) auf eine Temperatur, die eine Übergangstemperatur überschreitet,
**dadurch gekennzeichnet, dass** sie weiter umfasst:
- eine erste und zweite Rolle (3, 4), die sich frei auf parallelen Achsen (5, 6) drehen,
- Übertragungsvorrichtungen (7, 8) der Drehung zwischen der ersten und der zweiten Rolle (3, 4), um so die Rollen simultan in entgegengesetzte Richtungen drehen zu lassen,
und dass:
die zwei Extremitätsabschnitte (1a, 1b) jeweils an der ersten und zweiten Rolle (3, 4) befestigt sind und mindestens teilweise auf den Rollen aufgewickelt sind, wobei der Band (1)-Abschnitt zwischen einer Rolle und der anderen Rolle angeordnet ist und ein S bildet, und
das Band dazu neigt, sich in die entgegengesetzte Richtung in Bezug auf die ursprüngliche Richtung zu wickeln, wenn es von den Heizvorrichtungen über die Übergangstemperatur erwärmt wird, um so die gleichzeitige Drehung der beiden Rollen (3, 4) in entgegengesetzte Richtungen zu verursachen, ausgehend von einer Ruheposition, in welcher das Band (1) fast vollständig auf der ersten Rolle (4) aufgewickelt ist, bis zu einer Endposition, in welcher das Band (1) fast vollständig auf der zweiten Rolle (3) aufgewickelt ist.

2. Betätigungsvorrichtung nach Anspruch 1, **dadurch gekennzeichnet, dass** die Übertragungsvorrichtungen aus zwei Zahnrädern (7, 8) bestehen, die gegenseitig eingreifen und verbunden sind, um sich jeweils auf den beiden Rollen (3, 4) zu drehen.

3. Betätigungsvorrichtung nach Anspruch 1, **dadurch gekennzeichnet, dass** mindestens eine der beiden Rollen (3, 4) mit elastischen Vorrichtungen (9) ausgestattet ist, die die beiden Rollen in die Ruheposition zurückrufen.

4. Betätigungsvorrichtung nach Anspruch 1, **dadurch gekennzeichnet, dass** zwei Bänder (1, 10) insgesamt den beiden Rollen zugeordnet sind und so angeordnet sind, um jeweils die Drehung der Rollen aus der Ruheposition in die Endposition und das Zurückkehren der Rollen aus der Endposition in die Ruheposition zu verursachen.

5. Betätigungsvorrichtung nach Anspruch 1, **dadurch gekennzeichnet, dass** die Heizvorrichtungen verursachen können, dass ein elektrischer Strom durch das Band (1) fließt.

6. Betätigungsvorrichtung nach Anspruch 1, **dadurch gekennzeichnet, dass** eines der Zahnräder (7) angeschlossen ist, um eine Schraube (13) zu drehen, wodurch die lineare Bewegung eines Betätigungsstabes (14) verursacht wird.

7. Betätigungsvorrichtung nach Anspruch 1, **dadurch gekennzeichnet, dass** eines der Zahnräder (7) mit einer Zahnstange (15) eingreift, die zur Betätigungsstange (14) gehört.

8. Betätigungsvorrichtung nach Anspruch 1, **dadurch gekennzeichnet, dass** der Schaft einer der beiden Rollen (3, 4) einen Ventilverschlussstift (21) steuert.

9. Betätigungsvorrichtung nach Anspruch 1, **dadurch gekennzeichnet, dass** eines der Zahnräder (7) mit einer Zahnstange eingreift, die zu einem Tor oder einer Schiebetür gehört.

10. Betätigungsvorrichtung nach Anspruch 1, **dadurch gekennzeichnet, dass** die beiden Rollen zwei Kipphebel (19, 20) steuern und drehen, um einen Stift (16) in einem Schloss zu verriegeln.

## Revendications

1. Actionneur en alliage à mémoire de forme comprenant :
- une lame allongée plane (1) réalisée en un alliage à mémoire de forme, comportant deux parties d'extrémité (1a,1b),
- des dispositifs pour chauffer ladite lame (1) à une température dépassant une température de transition,
**caractérisé en ce qu'**il comporte en outre :
- des premier et second rouleaux (3,4) tournant librement sur des axes parallèles (5,6),
- des dispositifs de transmission (7,8) de la rotation entre ledit premier et ledit second rouleaux (3,4) de manière à amener lesdits rouleaux à tourner simultanément dans des directions opposées,
et **en ce que** :
lesdites deux parties d'extrémité (1a,1b) sont fixées respectivement audit premier et audit second rouleaux (3,4) et sont au moins partiellement enroulées sur lesdits rouleaux, la section en forme de lame (1) étant disposée entre un rouleau et l'autre formant un S, et
ladite lame tendant à s'enrouler dans la direction opposée par rapport à la direction originale lorsqu'elle est chauffée par ledit dispositif de chauffage au-delà de ladite température de transition de manière à provoquer la rotation simultanée des deux rouleaux (3,4) dans des directions opposées, à partir d'une position de repos, dans laquelle la lame (1) est presque complètement enroulée sur le premier rouleau (4), jusque dans une position finale, dans laquelle la lame (1) est presque complètement enroulée sur le second rouleau (3).

2. Actionneur selon la revendication 1, **caractérisé en ce que** lesdits dispositifs de transmission sont constitués de deux dentures (7,8), qui engrènent réciproquement et sont raccordées de manière à tourner respectivement sur les deux rouleaux (3,4).

3. Actionneur selon la revendication 1, **caractérisé en ce que** au moins l'un des deux rouleaux (3,4) est équipé de dispositifs élastiques (9) maintenant les deux rouleaux dans la position de repos.

4. Actionneur selon la revendication 1, **caractérisé en ce que** deux lames (1,10) sont associées au total aux deux rouleaux (3,4) en étant agencées de manière à provoquer la rotation des rouleaux respectivement depuis la position de repos jusqu'à la position finale, et le retour des rouleaux depuis la position finale jusqu'à la position de repos.

5. Actionneur selon la revendication 1, **caractérisé en ce que** les dispositifs de chauffage peuvent amener un courant électrique à traverser ladite lame (1).

6. Actionneur selon la revendication 1, **caractérisé en ce que** l'une desdites dentures (7) est raccordée de manière à faire tourner une vis (13) en provoquant le déplacement linéaire d'une tige (14) de l'actionneur.

7. Actionneur selon la revendication 1, **caractérisé en ce que** l'une desdites dentures (7) engrène avec une crémaillère (15) faisant partie d'une tige (14) de l'actionneur.

8. Actionneur selon la revendication 1, **caractérisé en ce que** l'arbre de l'un desdits rouleaux (3,4) commande une goupille (21) de blocage de la soupape.

9. Actionneur selon la revendication 1, **caractérisé en ce que** l'une des dentures (7) engrène avec une crémaillère faisant partie d'une porte ou d'une portière coulissante.

10. Actionneur selon la revendication 1, **caractérisé en ce que** les deux rouleaux commandent et font tourner deux leviers oscillants (19,20) pour bloquer une goupille (16) dans un élément de blocage.
